# EUROPÄISCHE PATENTSCHRIFT

(11) **EP 0 465 991 B1**
(45) Veröffentlichungstag und Bekanntmachung des Hinweises auf die Patenterteilung: **15.11.1995**
(21) Anmeldenummer: 91110925.4
(22) Anmeldetag: 02.07.1991
(51) Int. Cl.: C04B 28/02, C04B 40/06

(54) **Im Nassspritzverfahren verarbeitbare Mörtel und Beton und Verfahren zur Verarbeitung von Mörtel und Beton**
Mortar and concrete to be processed by wet spraying and method of production of mortar and concrete
Mortier et béton propre à la projection humide et méthode de production de mortier et de béton

(30) Priorität: 09.07.1990 CH 2281/90
(43) Veröffentlichungstag der Anmeldung: 15.01.1992
(73) Patentinhaber: Sika AG, vorm. Kaspar Winkler & Co., CH-8048 Zürich (CH)
(72) Erfinder: Bürge, Theodor A., CH-8954 Geroldswil (CH); Bracher Gustav, Dr., CH-8911 Rifferswil (CH)
(74) Vertreter: Blum, Rudolf Emil Ernst

(56) Entgegenhaltungen:
- EP-A- 0 177 308
- EP-A- 0 222 932
- EP-A- 0 290 394
- EP-A- 0 402 319
- GB-A- 2 194 528
- CHEMICAL ABSTRACTS, Band 113, Nr. 2, 1990, Seite 303, Zusammenfassung Nr. 11238m, Columbus, Ohio, US; & JP-A-01 257 156
- CHEMICAL ABSTRACTS, Band 94, Nr. 22, 1. Juni 1981, Seite 302, Zusammenfassung Nr. 179609w, Columbus, Ohio, US; & JP-A-80 140 749
- CHEMICAL ABSTRACTS, Band 103, Nr. 14, 7. Oktober 1985, Seite 276, Zusammenfassung Nr. 109151w, Columbus, Ohio, US; & JP-A-60 054 951
- CHEMICAL ABSTRACTS, Band 112, Nr. 2, 1990, Seite 233, Zusammenfassung Nr. 11233k, Columbus, Ohio, US; & JP-A-01 201 056
- SIKA INFORMATIONEN

## Beschreibung

Die Erfindung betrifft Mörtel und Beton für das Nassspritzverfahren, dessen Abbindezeit verlängert und beispielsweise so stark verzögert ist, dass er aus einem Transportbetonwerk auf die Baustelle geliefert werden kann und dort während bis zu zwei Tagen verarbeitbar bleibt, aber durch Zugabe eines Abbindebeschleunigers jederzeit zum sofortigen Ansteifen, Abbinden und raschen Erhärten gebracht werden kann, sowie ein Verfahren zur Verarbeitung von solchem Mörtel und Beton im Nassspritzverfahren.

Die Entwicklung im Spritzbeton und in der maschinellen Betonsanierung geht immer mehr in Richtung des Nassspritzverfahrens, dessen Vorteile in der hohen Spritzleistung, der hohen, konstanten Qualität des Endproduktes, dem minimalen Rückprall und der geringen Staubentwicklung liegen.

Das Nassspritzverfahren von Mörtel und Beton ist bisher nur auf Grossbaustellen zum Einsatz gekommen, weil das Verfahren nur bei grossen Spritzleistungen mit grossen Beton- und Mörtelkubaturen wirtschaftlich war. Ein Nassspritzbeton oder -mörtel kann nur in einer weichplastischen Konsistenz verarbeitet werden.

Bei bisher bekanntem Mörtel und Beton steifte der Mörtel oder Beton bei Unterbrüchen rasch an, so dass die Schlauchleitungen und allenfalls die Spritzmaschine bei einem längeren Unterbruch gereinigt werden mussten. Das Reinigen der Nassspritzmaschine ist gegenüber dem Reinigen der Trockenspritzmaschine immer als entscheidender Nachteil dargestellt worden. Das Reinigen der Nassspritzmaschine erfolgt mit sehr viel Wasser durch Ausspülen sämtlicher Teile, während im Trockenspritzverfahren die Maschine und die Schläuche einfach mit der vorhandenen Pressluft ausgeblasen werden können. Bisher musste im Nassspritzverfahren immer der gesamte Fahrmischerinhalt verspritzt werden, was unter Umständen zu unnötigen Spritzschichten führte. Gerade im innerstädtischen Baubetrieb, wo heute im 24-Stunden-Betrieb gearbeitet wird, muss das Betonwerk seinen Betrieb während 24 Stunden gewährleisten. Dadurch sind Klagen wegen Nachtruhestörung durch den Bauverkehrslärm eingegangen.

Für die Verwendung im Nassspritzverfahren muss der Mörtel oder Beton eine pumpfähige Konsistenz aufweisen.

Damit sowohl eine geeignete Konsistenz als auch eine optimale Beschleunigung erzielt werden konnte, musste der Beton oder Mörtel kurz vor der Verarbeitung, d.h. auf der Baustelle, mit einem Betonverflüssiger (BV) oder Hochleistungsbetonverflüssiger (HBV) aufgemischt werden, um eine pumpbare Konsistenz zu erreichen. Wäre der BV oder HBV dem Beton schon im Transportbetonwerk zugemischt worden, so hätte dieser bereits während des Transportes mit dem Versteifen begonnen.

Da die homogene Durchmischung des BV oder HBV für die Eigenschaften des Mörtels oder Betons sehr wichtig ist, ist deren Zumischen auf der Baustelle ungünstig, da nicht alle Fahrmischer in der Lage sind, kleine Dosierungen von Verflüssigern optimal zu vermischen.

Auch im Trockenspritzverfahren ist die Verarbeitbarkeit der Trockenmischung nicht unbeschränkt. Das Trockengemisch mit einer Eigenfeuchte des Kies-/Sandgemisches, die kleiner ist als 4 %, ist während maximal 4 Stunden haltbar.

Bisher war es nicht möglich, die Konsistenz des Betons oder Mörtels über Stunden konstant zu halten und anschliessend mit einem Abbindebeschleuniger zu einem sofortigen Ansteifen, Abbinden bzw. raschem Erhärten Zu beschleunigen, so dass der frisch aufgespritzte Beton oder Mörtel nicht herunterlief.

Zum Stand der Technik wird auf CA, 113, Nr.2, 1990, S.303, Nr. 11238m verwiesen. Danach ist ein Spritzbaren Mörtel bekannt, dessen Grundmischung Calciumhydroxid, Alkalicarbonat und Phosphat aufweist und dem im Zuge der Verarbeitung ein Alkalialuminat zugesetzt wird.

Das Ziel der Erfindung bestand deshalb darin, einen Beton oder Mörtel für das Nassspritzverfahren so herzustellen, dass
- der Verflüssiger oder Hochleistungsverflüssiger im Betonwerk zugegeben werden kann;
- der Beton oder Mörtel bis maximal zwei Tage in der Konsistenz sich nicht wesentlich verändert und förderbar bleibt;
- der Beton oder Mörtel jederzeit mit einem Abbindebeschleuniger unter dem notwendigen Abbindeverhalten verspritzt werden kann;
- bei längeren Unterbrüchen die Maschine nicht gereinigt werden muss, da der Abbindebeschleuniger erst an der Spritzdüse zugesetzt wird;
- trotz der Verzögerung kein Festigkeitsabfall in den Früh- und Endfestigkeiten auftritt.

Das besagte Ziel wird erreicht durch die im Patentanspruch 1 beschriebene Zusammensetzung gemäss der alle Komponenten des Betons oder Mörtels, mit Ausnahme des Abbindebeschleunigers, im Transportbetonwerk zugemischt werden können. Dies bringt den Vorteil einer gut homogenisierten Mischung, welche sich auch günstig auf die Endfestigkeiten auswirkt. Ausserdem hat die neue Zusammensetzung den Vorteil, dass im Transportbetonwerk weniger verschiedene Rezepturen hergestellt werden müssen, da auch ein sehr lang verzögerter Beton oder Mörtel jederzeit zum Abbinden beschleunigt werden kann.

Der Abbindebeschleuniger besteht vorzugsweise mindestens im wesentlichen aus Kaliumaluminat und gegebenenfalls Kaliumcarbonat und/ oder Kaliumhydroxid, wobei handelsübliche Aluminate gewöhnlich bereits einen gewissen Hydroxidanteil aufweisen.

Völlig überraschend und entgegen aller Theorie und praktischer Erfahrung konnte insbesondere gefunden werden, dass ein langzeitverzögerter Beton oder Mörtel, den Baustellenbedingungen entsprechend, jederzeit mit einem hochreaktiven Abbindebeschleuniger, bevorzugt auf Kaliumaluminat-Basis, wobei vorteilhafterweise der Aluminium-Gehalt 5 - 15 %, der Karbonat-Gehalt 0-15 % und der Hydroxid-Gehalt 0,2-10 % beträgt, zum sofortigen Ansteifen, Abbinden und raschen Erhärten gebracht werden kann. Die Festigkeitsentwicklung zeigte keine Unterschiede zu nicht abbindeverzögertem Beton oder Mörtel.

Ferner konnte festgestellt werden, dass abbindeverzögerter Beton und Mörtel intensiver reagiert und für die gleiche Abbindebeschleunigung geringere Mengen Abbindebeschleuniger benötigt als unverzögerter Beton und Mörtel.

Die Verwendung der erfindungsgemässen Betone und Mörtel resultiert neben den ökologischen und wirtschaftlichen Vorteilen in neuen Anwendungsgebieten für das Nassspritzverfahren wie beispielsweise:
- Mehrphasenvortrieb im Tunnelbau
- Roll- und Gleitschalungsbau
- Bau-, Gruben- und Felssicherung
- schalungsfreie Konstruktionen
- Betonsanierung
Die Erfindung wird durch die nachfolgenden Beispiele näher erläutert.

### Beispiel 1:

Das erste Beispiel beschreibt den Stand der Technik im Nassspritzverfahren, wie es heute auf zahlreichen Tunnelgrossbaustellen zum Einsatz kommt. Am Tunnel Heilsberg wurde die folgende Betonrezeptur verwendet:

| | |
|---|---|
| - Anmachmenge: | 6 m3 |
| - Betonrezeptur: Portlandzement | 350 kg/m3 |
| - Zuschlag: | 0-8 mm |
| - Wasser:Zement:Faktor | (W/Z) = 0.59 |
| Ausbreitmass ab Werk: | 36 - 40 cm |

Transport ab Betonwerk bis Baustelle 25 Minuten.
Zugabe des Hochleistungsbetonverflüssigers (HBV) mit schwacher Verzögerungswirkung auf Basis eines modifizierten Melamin- und Naphtalinsulfonsäure-Kondensates, (SIKAMENT 300 - 30) mit einer Dosierung von 1 %.
Ausbreitmass nach 5 Minuten mischen: 46 - 52 cm
Spritzleistung: 6 - 12 m3/h
Erreichen der Pumpbarkeitsgrenze nach Zugabe des Hochleistungsbetonverflüssigers (HBV): 40 Minuten.
Spritzbarer Zeitraum: 30 - 60 Minuten
Falls die Spritzdauer 40 Minuten überschritt, musste die Konsistenz durch Nachdosieren von HBV wieder eingestellt werden.
Bei dieser Anwendung betrug die Dosierung des Abbindebeschleunigers auf Basis von Kaliumaluminat, Kaliumcarbonat und Kaliumhydroxid 5,2 %.
Die Druckfestigkeiten betrugen:

| | |
|---|---|
| nach 1 Stunde: | 0,3 MPa |
| nach 28 Tagen: | 30 MPa |

### Beispiel 2:

| | |
|---|---|
| Betonrezeptur: Portlandzement | 425 kg/m3 |
| Zuschlag | 0 - 8 mm |
| Hochleistungsbetonverflüssiger (HBV) auf Basis sulfoniertem Melamin-Formaldehyd-Kondensat (SIKAMENT 300) | 0,8 % |
| Abbindeverzögerer auf Basis Polyphosphat und Polyhydroxycarbonsäure (Sika Retarder) | 0,6 % |
| Abbindebeschleuniger auf Basis Kaliumaluminat, -carbonat und -hydroxid (Sigunit L20) | 4 % |

Der aus dem Transportbetonwerk angelieferte Beton hatte eine gut verarbeitbare und pumpbare Konsistenz von mindestens 8 Stunden. Mit 4 % des Abbindebeschleunigers konnte jederzeit ein einwandfreies Ansteifen, Abbinden und Erhärten des Betons erzielt werden.

Die Druckfestigkeiten betrugen:

| | |
|---|---|
| nach 1 Stunde | 0,4 MPa |
| nach 28 Tagen | 36 MPa |

### Beispiel 3:

| | |
|---|---|
| Betonrezeptur: Portlandzement | 425 kg/m3 |
| Zuschlag: | 0 - 8 mm |
| Hochleistungsbetonverflüssiger mit stark abbindeverzögernder Wirkung auf Basis eines sulfonierten Vinylcopolymeren (SIKAMENT 10) | 1,6 % |
| Abbindebeschleuniger auf Basis Kaliumaluminat,-carbonat und -hydroxid (Sigunit L 20) | 4 % |

Der angelieferte Beton hatte eine gute Pumpkonsistenz von mindestens 20 Stunden.
Die Druckfestigkeiten betrugen:

| | |
|---|---|
| nach 1 Stunde | 0,3 MPa |
| nach 28 Tagen | 35 MPa |

Der Abbindebeschleuniger wird am Ort der Verwendung über eine Dosierpumpe an der Spritzdüse zugesetzt.

## Patentansprüche (Patentansprüche für folgende(n) Vertragsstaat(en): AT, BE, CH, DE, DK, FR, GB, GR, IT, LI, LU, NL, SE)

1. Zweikomponenten-Mörtel oder Beton für das Nassspritzverfahren bei dem eine erste Komponente das hydraulische Bindemittel gemeinsam mit einem abbindeverzögernden Mittel enthält, so dass sie eine verlängerte Verarbeitungszeit aufweist, wobei das abbindeverzögernde Mittel einen Abbindeverzögerer auf Basis anorganischer und/oder organischer Phosphorsäuren und deren Salze und/oder Polyhydroxylverbindungen und/oder Hydroxycarbonsäuren und/oder einen Betonverflüssiger oder Hochleistungsbetonverflüssiger auf Lignin-, Melamin, Naphthalin-, Vinyl- oder Acrylbasis enthält, wobei bei Betonverflüssigern auf Melamin- und/oder Naphthalinbasis die Anwesenheit eines weiteren abbindeverzögernden Mittels aus der angeführten Gruppe notwendig ist, und die Dosierung des Abbindeverzögerers 0,01 - 5 %, und/oder des Verflüssigers 0,2 - 5 % des Bindemittelgewichtes beträgt und bei dem die zweite Komponente die zum raschen Erhärten des Mörtels oder Betons führt, einen Abbindebeschleuniger enthält oder daraus besteht, wobei der Abbindebeschleuniger Alkalialuminate umfasst und in einer Menge von 0,5 - 10 % bezogen auf das Bindemittelgewicht der ersten Komponente verwendet wird.

2. Beton und Mörtel gemäss Anspruch 1, dadurch gekennzeichnet, dass der Abbindebeschleuniger ausserdem Alkalikarbonate und/ oder -hydroxide enthält.

3. Beton und Mörtel gemäss Anspruch 1 oder 2, dadurch gekennzeichnet, dass der Abbindeverzögerer kondensierte Phosphate wie Pyrophosphat, Polyphosphat, Hexametaphosphat oder Phosphonsäurederivate enthält.

4. Beton und Mörtel gemäss einem der Ansprüche 1 bis 3, dadurch gekennzeichnet, dass der Abbindeverzögerer Salze von Hydroxy- und/oder Polyhydroxycarbonsäure wie α- Hydroxyessigsäure, Citronensäure, Glukonsäure oder Heptonsäure enthält.

5. Beton und Mörtel gemäss einem der Ansprüche 1 bis 4, dadurch gekennzeichnet, dass der Abbindeverzögerer teilweise hydrolisierte Stärke und/oder Kohlehydrate enthält.

6. Beton und Mörtel gemäss einem der Ansprüche 1 bis 5, dadurch gekennzeichnet, dass der Betonverflüssiger oder Hochleistungsbetonverflüssiger Ligninsulfonsäure, sulfonierte Melamin-Formaldehyd-Kondensate, Naphthalinsulfonsäure-Formaldehyd-Kondensate, sulfonierte Vinyl-Copolymere und/oder Acryl-Copolymere enthält.

7. Beton und Mörtel gemäss einem der Ansprüche 1 bis 6, dadurch gekennzeichnet, dass er weiterhin ein Thixotropiermittel wie quellfähigen Celluloseaether, Alginate und/ oder Polysaccharide enthält.

8. Beton und Mörtel gemäss einem der Ansprüche 1 bis 7, dadurch gekennzeichnet, dass im Abbindebeschleuniger der Aluminium-Gehalt 5-15 %, der Karbonat-Gehalt 0-15 % und der Hydroxid-Gehalt 0,2-10 % beträgt.

9. Beton und Mörtel gemäss den Ansprüchen 1 bis 8, dadurch gekennzeichnet, dass der Abbindebeschleuniger Kaliumaluminat und gegebenenfalls Kaliumcarbonat und/ oder Kaliumhydroxid umfasst.

10. Verfahren zur Verarbeitung des Mörtels und Betons nach den Ansprüchen 1-9 im Nassspritzverfahren, dadurch gekennzeichnet, dass man der ersten Komponente am Orte der Verwendung die zweite Komponente zusetzt und die entsprechende Mischung danach verspritzt.

11. Verfahren nach Anspruch 10 dadurch gekennzeichnet, dass man die zweite Komponente an der Spritzdüse zusetzt.

## Patentansprüche (Patentansprüche für folgende(n) Vertragsstaat(en): ES)

1. Verfahren zur Herstellung von Zweikomponenten-Mörtel oder Beton für das Nassspritzverfahren, wobei, dass eine erste Komponente enthaltend das hydraulische Bindemittel und ein abbindeverzögerndes Mittel durch Mischen hergestellt wird, so dass sie eine verlängerte Verarbeitungszeit aufweist, wobei das abbindeverzögernde Mittel einen Abbindeverzogerer auf Basis anorganischer und/oder organischer Phosphorsäuren und deren Salze und/oder Polyhydroxylverbindungen und/ oder Hydroxycarbonsäuren und/oder einen Betonverflüssiger oder Hochleistungsbetonverflüssiger auf Lignin-, Melamin, Naphthalin-, Vinyl- oder Acrylbasis enthält, wobei bei Betonverflüssigern auf Melamin- und/oder Naphthalinbasis die Anwesenheit eines weiteren abbindeverzögernden Mittels aus der angeführten Gruppe notwendig ist, und die Dosierung des Abbindeverzögerers 0,01 - 5 %, und/oder des Verflüssigers 0,2 - 5 % des Bindemittelgewichtes beträgt und wobei eine zweite Komponente die zum raschen Erhärten des Mörtels oder Betons führt, hergestellt wird, die einen Abbindebeschleuniger enthält oder daraus besteht, wobei der Abbindebeschleuniger Alkalialuminate umfasst und in einer Menge von 0,5 - 10 % bezogen auf das Bindemittelgewicht der ersten Komponente verwendet wird.

2. Verfahren zur Herstellung von Beton und Mörtel gemäss Anspruch 1, dadurch gekennzeichnet, dass ein Abbindebeschleuniger verwendet wird, der ausserdem Alkalikarbonate und/ oder -hydroxide enthält.

3. Verfahren gemäss Anspruch 1 oder 2, dadurch gekennzeichnet, dass ein Abbindeverzögerer verwendet wird, der kondensierte Phosphate wie Pyrophosphat, Polyphosphat, Hexametaphosphat oder Phosphonsäurederivate enthält.

4. Verfahren gemäss einem der Ansprüche 1 bis 3, dadurch gekennzeichnet, dass ein Abbindeverzögerer verwendet wird, der Salze von Hydroxy- und/oder Polyhydroxycarbonsäure wie α- Hydroxyessigsäure, Citronensäure, Glukonsäure oder Heptonsäure enthält.

5. Verfahren gemäss einem der Ansprüche 1 bis 4, dadurch gekennzeichnet, dass ein Abbindeverzögerer verwendet wird, der teilweise hydrolisierte Stärke und/oder Kohlehydrate enthält.

6. Verfahren gemäss einem der Ansprüche 1 bis 5, dadurch gekennzeichnet, dass Betonverflüssiger oder Hochleistungsbetonverflüssiger verwendet wird, der Ligninsulfonsäure, sulfonierte Melamin-Formaldehyd-Kondensate, Naphthalinsulfonsäure-Formaldehyd-Kondensate, sulfonierte Vinyl-Copolymere und/oder Acryl-Copolymere enthält.

7. Verfahren gemäss einem der Ansprüche 1 bis 6, dadurch gekennzeichnet, dass weiterhin ein Thixotropiermittel wie quellfähigen Celluloseaether, Alginate und/oder Polysaccharide zugemischt wird.

8. Verfahren gemäss einem der Ansprüche 1 bis 7, dadurch gekennzeichnet, dass ein Abbindebeschleuniger mit einem Aluminium-Gehalt von 5-15 %, einem Karbonat-Gehalt von 0-15 % und einem Hydroxid-Gehalt von 0,2-10 % verwendet wird.

9. Verfahren gemäss den Ansprüchen 1 bis 8, dadurch gekennzeichnet, dass ein Abbindebeschleuniger, der Kaliumaluminat und gegebenenfalls Kaliumcarbonat und/oder Kaliumhydroxid umfasst, verwendet wird.

10. Verfahren zur Verarbeitung des nach den Ansprüchen 1-9 hergestellten Mörtels und Beton im Nassspritzverfahren, dadurch gekennzeichnet, dass man der ersten Komponente am Orte der Verwendung die zweite Komponente zusetzt und die entsprechende Mischung danach verspritzt.

11. Verfahren nach Anspruch 10 dadurch gekennzeichnet, dass man die zweite Komponente an der Spritzdüse zusetzt.

## Claims (Claims for the following Contracting State(s): AT, BE, CH, DE, DK, FR, GB, GR, IT, LI, LU, NL, SE)

1. Two-component mortar and concrete for the wet-spraying procedure, in which a first component contains the hydraulic binder in common with a setting-retarding agent so that it has an extended workability period, the setting-retarding agent containing a setting retarder based on inorganic and/or organic phosphoric acids and their salts and/or poly-hydroxyl compounds and/or hydroxy-carboxylic acids and/or a concrete fluidiser or high-performance fluidiser based on lignin, melamine, naphthalene, vinyl, or acrylic, and with melamine-based and/or napthalene-based concrete fluidisers the presence of a further setting-retarding agent from the stated group is necessary, and the dosage of setting retarder amounts to 0.01-5%, and/or of the fluidiser 0.2-5% of the weight of binder, and in which the second component which leads to rapid hardening of the mortar or concrete contains or comprises a setting accelerator, the setting accelerator including alkali aluminates and being used in a quantity of 0.5-10% by weight in relation to the weight of binder in the first component.

2. Concrete and mortar according to claim 1, characterised in that the setting accelerator also contains alkali carbonate and/or hydroxide.

3. Concrete and mortar according to claim 1 or 2, characterised in that the setting retarder contains condensed phosphates such a pyrophosphate, polyphosphate, hexametaphosphate or phosphonic acid derivatives.

4. Concrete and mortar according to one of claim 1 to 3, characterised in that the setting retarder contains salts of hydroxy and/or polyhydroxy carboxylic acids such as α-hydroxyacetic acids, citric acids, gluconic acids or heptonic acids.

5. Concrete and mortar according to one of claims 1 to 4, characterised in that the setting retarder contains partially hydrolyzed starches and/or carbohydrates.

6. Concrete and mortar according to one of claims 1 to 5, characterised in that the concrete fluidiser or high-performance fluidiser contains lignin sulfonic acids, sulfonated melamine formaldehyde condensates, naphthalene-sulfonic acid-formaldehyde condensates, sulfonated vinyl copolymers and/or acryl-copolymers.

7. Concrete and mortar according to one of claims 1 to 6 characterised in that it furthermore contains a thixotropic agent such as expandable cellulose ether, alginate and/or polysaccharides.

8. Concrete and mortar according to one of claims 1 to 7, characterised in that in the setting accelerator the aluminium content amounts to 5-15%, the carbonate content 0-15% and the hydroxide content 0.2-10%.

9. Concrete and mortar according to claims 1 to 8, characterised in that the setting accelerator includes potassium aluminate and possibly potassium carbonate and/or potassium hydroxide.

10. Process for working the mortar and concrete according to claims 1 to 9 in the wet spraying process, characterised in that the first component is added to the second component at the point of use and the mixture which results is then sprayed.

11. Process according to claim 10, characterised in that the second component is added at the spraying nozzle.

## Claims (Claims for the following Contracting State(s): ES)

1. Process for making two-component mortar and concrete for the wet-spraying process, in which a first component containing the hydraulic binder and a setting-retarding agent is produced so that it has an extended workability period, the setting-retarding agent containing a setting retarder based on inorganic and/or organic phosphoric acids and their salts and/or poly-hydroxyl compounds and/or hydroxy-carboxylic acids and/or a concrete fluidiser or high-performance fluidiser based on lignin, melamine, naphthalene, vinyl, or acrylic, and in which with melamine-based and/or napthalene-based concrete fluidisers the presence of a further setting-retarding agent from the stated group is necessary, and the dosage of setting retarder amounts to 0.01-5%, and/or of the fluidiser 0.2-5% of the weight of binder, and in which a second component which leads to rapid hardening of the mortar or concrete is produced containing or comprising a setting accelerator, the setting accelerator including alkali aluminates and being used in a quantity of 0.5-10% by weight in relation to the weight of binder in the first component.

2. Process for making concrete and mortar according to claim 1, characterised in that a setting accelerator is used which also contains alkali carbonate and/or hydroxide.

3. Process according to claim 1 or 2, characterised in that a setting retarder is used which contains condensed phosphates such a pyrophosphate, polyphosphate, hexametaphosphate or phosphonic acid derivatives.

4. Process according to one of claim 1 to 3, characterised in that a setting retarder is used which contains salts of hydroxy and/or polyhydroxy carboxylic acids such as α-hydroxyacetic acids, citric acids, gluconic acids or heptonic acids.

5. Process according to one of claims 1 to 4, characterised in that a setting retarder is used which contains partially hydrolyzed starches and/or carbohydrates.

6. Process according to one of claims 1 to 5, characterised in that concrete fluidiser or high-performance fluidiser is used which contains lignin sulfonic acids, sulfonated melamine formaldehyde condensates, naphthalene-sulfonic acid-formaldehyde condensates, sulfonated vinyl copolymers and/or acryl-copolymers.

7. Process according to one of claims 1 to 6 characterised in that furthermore a thixotropic agent such as expandable cellulose ether, alginate and/or polysaccharide is mixed in.

8. Process according to one of claims 1 to 7, characterised in that in a setting accelerator is used with an aluminium content of 5-15%, a carbonate content of 0-15% and a hydroxide content of 0.2-10%.

9. Process according to claims 1 to 8, characterised in that a setting accelerator is used which includes potassium aluminate and possibly potassium carbonate and/or potassium hydroxide.

10. Process for working the mortar and concrete produced according to claims 1 to 9 in the wet spraying process, characterised in that the first component is added to the second component at the point of use and the mixture which results is then sprayed.

11. Process according to claim 10, characterised in that the second component is added at the spraying nozzle.

## Revendications (Revendications pour l'(les) Etat(s) contractant(s) suivant(s): AT, BE, CH, DE, DK, FR, GB, GR, IT, LI, LU, NL, SE)

1. Mortier ou béton à deux composants pour le procédé de projection humide, dans lequel un premier composant contient le liant hydraulique en même temps qu'un agent retardateur de prise, de manière à ce qu'il présente une durée d'utilisation prolongée, l'agent retardateur de prise contenant un retardateur de prise à base d'acides phosphoriques inorganiques et/ou organiques ainsi que de leurs sels et/ou de composés polyhydroxyliques et/ou d'acides hydroxycarboxyliques et/ou un fluidifiant de béton ou un superfluidifiant de béton à base de lignine, de mélamine, de naphtalène, de vinyle ou d'acryle, la présence d'un autre agent retardateur de prise du groupe indiqué étant nécessaire dans les fluidifiants du béton, et le dosage du retardateur de prise étant de 0,01-5%, et/ou le dosage du fluidifiant étant de 0,2-5% du poids du liant, et dans lequel le second composant qui conduit au durcissement rapide du mortier ou du béton contient un accélérateur de prise ou est constitué de celui-ci, l'accélérateur de prise contenant des aluminates alcalins et étant utilisé à une quantité de 0,5-10%, calculés sur le poids du liant du premier composant.

2. Béton et mortier selon la revendication 1, caractérisés en ce que l'accélérateur de prise contient en outre des carbonates et/ou des hydroxydes de métaux alcalins.

3. Béton et mortier selon la revendication 1 ou 2, caractérisés en ce que le retardateur de prise contient des phosphates condensés tels que pyrophosphate, polyphosphate, hexamétaphosphate ou dérivés de l'acide phosphonique.

4. Béton ou mortier selon l'une quelconque des revendications 1 à 3, caractérisés en ce que le retardateur de prise contient des sels d'acides hydroxycarboxyliques et/ou polyhydroxycarboxyliques, tels que des sels d'acide α-hydroxyacétique, d'acide citrique, d'acide gluconique ou d'acide heptonique.

5. Béton et mortier selon l'une quelconque des revendications 1 à 4, caractérisés en ce que le retardateur de prise contient de l'amidon et/ou des hydrates de carbone, partiellement hydrolysés.

6. Béton et mortier selon l'une quelconque des revendications 1 à 5, caractérisés en ce que le fluidifiant de béton ou le superfluidifiant de béton contient de l'acide lignosulfonique, des condensats sulfonés de mélanine-formaldéhyde, des condensats sulfonés de naphtalène-formaldéhyde, des copolymères sulfonés de vinyle et/ou d'acryle.

7. Béton et mortier selon l'une quelconque des revendications 1 à 6, caractérisés en ce qu'il contient en outre un agent thixotropique tel que l'éther de cellulose, l'alginate et/ou des polysaccharides, susceptibles de gonflement.

8. Béton et mortier selon l'une quelconque des revendications 1 à 7, caractérisés en ce que dans l'accélérateur de prise, la teneur en aluminium vaut de 5 à 15%, la teneur en carbonate de 0 à 15% et la teneur en hydroxyde de 0,2 à 10%.

9. Béton et mortier selon l'une quelconque des revendications 1 à 8, caractérisés en ce que l'accélérateur de prise contient de l'aluminate de potassium et éventuellement du carbonate de potassium et/ou de l'hydroxyde de potassium.

10. Procédé de traitement du mortier et du béton selon l'une quelconque des revendications 1-9 pour le procédé de projection humide, caractérisé en ce que l'on ajoute le premier composant à l'endroit de l'utilisation du second composant, et que le mélange correspondant est ensuite projeté.

11. Procédé selon la revendication 10, caractérisé en ce que l'on ajoute le second composant au niveau du gicleur de projection.

## Revendications (Revendications pour l'(les) Etat(s) contractant(s) suivant(s): ES)

1. Procédé de fabrication de mortier ou de béton à deux composants pour le procédé de projection humide, dans lequel un premier composant contenant le liant hydraulique et un agent retardateur de prise est fabriqué par mélange, de sorte qu'il présente une durée d'utilisation prolongée, l'agent retardateur de prise présentant un retardateur de prise à base d'acides phosphoriques inorganiques et/ou organiques et leurs sels et/ou des composés polyhydroxylés et/ou des acides hydroxycarboxyliques et/ou un fluidifiant du béton ou un superfluidifiant de béton à base de lignine, de mélamine, de naphtalène, de vinyle ou d'acryle, tandis que dans le cas de fluidifiant du béton à base de mélamine et/ou de naphtalène, la présence d'un autre agent retardateur de prise du groupe indiqué ci-dessus est nécessaire, et le dosage du retardateur de prise valant 0,01-5% du poids du liant, et/ou le dosage du fluidifiant valant 0,2-5% du poids du liant, et tandis qu'un second composant qui entraîne le durcissement rapide du mortier ou du béton est fabriqué, qui contient un accélérateur de prise ou est constitué de celui-ci, l'accélérateur de prise contenant des aluminates alcalins et étant utilisé à une quantité de 0,5-10%, calculés sur le poids de liant du premier composant.

2. Procédé de fabrication de béton et mortier selon la revendication 1, caractérisé en ce que l'accélérateur de prise contient en outre des carbonates et/ou des hydroxydes de métaux alcalins.

3. Procédé selon la revendication 1 ou 2, caractérisé en ce que le retardateur de prise contient des phosphates condensés tels que pyrophosphate, polyphosphate, hexamétaphosphate ou dérivés de l'acide phosphonique.

4. Procédé selon l'une quelconque des revendications 1 à 3, caractérisé en ce que le retardateur de prise contient des sels d'acide hydroxy et/ou polyhydroxycarboxylique, tels que des sels d'acide α-hydroxyacétique, d'acide citrique, d'acide gluconique ou d'acide heptonique.

5. Procédé selon l'une quelconque des revendications 1 à 4, caractérisé en ce que l'on utilise un retardateur de prise qui contient de l'amidon et/ou des hydrates de carbone partiellement hydraulisés.

6. Procédé selon l'une quelconque des revendications 1 à 5, caractérisé en ce que l'on utilise un fluidifiant de béton ou un superfluidifiant de béton qui contient de l'acide lignosulfonique, des condensats sulfonés de mélanine-formaldéhyde, des condensats sulfonés de naphtalène-formaldéhyde, des copolymères sulfonés de vinyle et/ou d'acryle.

7. Procédé selon l'une quelconque des revendications 1 à 6, caractérisé en ce que l'on mélange en outre un agent thixotropique tel que l'éther de cellulose, l'alginate et/ou des polysaccharide susceptibles de gonflement.

8. Procédé selon l'une quelconque des revendications 1 à 7, caractérisé en ce que l'on utilise un accélérateur de prise contenant une teneur en aluminium de 5-15%, une teneur en carbonates de 0-15% et une teneur en hydroxyde de 0,2-10%.

9. Procédé selon l'une quelconque des revendications 1 à 8, caractérisé en ce que l'on utilise un accélérateur de prise qui contient de l'aluminate de potassium et éventuellement du carbonate de potassium et/ou de l'hydroxyde de potassium.

10. Procédé de traitement du mortier et du béton fabriqués selon l'une quelconque des revendications 1-9, dans le procédé de projection humide, caractérisé en ce que l'on ajoute le second composant au premier composant sur le lieu d'utilisation, et en ce que le mélange correspondant est ensuite projeté.

11. Procédé selon la revendication 10, caractérisé en ce que l'on ajoute le second composant au niveau de la buse de projection.
